# EUROPÄISCHE PATENTSCHRIFT

(11) **EP 3 234 336 B1**
(45) Veröffentlichungstag und Bekanntmachung des Hinweises auf die Patenterteilung: **17.10.2018**
(21) Anmeldenummer: 15816439.2
(22) Anmeldetag: 17.12.2015
(51) Int. Cl.: F02M 26/70, F02D 9/10, F02D 9/06

(54) **VENTILKLAPPENANORDNUNG EINER VENTILVORRICHTUNG, UND EINE ENTSPRECHENDE VENTILVORRICHTUNG**
VALVE FLAP ASSEMBLY OF A VALVE DEVICE, AND CORRESPONDING VALVE DEVICE
ENSEMBLE DE CLAPETS DE SOUPAPE POUR DISPOSITIF À SOUPAPE, ET DISPOSITIF À SOUPAPE CORRESPONDANT

(30) Priorität: 18.12.2014 DE 102014119086
(43) Veröffentlichungstag der Anmeldung: 25.10.2017
(73) Patentinhaber: KNORR-BREMSE Systeme für Nutzfahrzeuge GmbH, 80809 München (DE)
(72) Erfinder: SCHARPF, Johannes, 82166 Gräfelfing (DE)
(86) Internationale Anmeldenummer: PCT/EP2015/080150
(87) Internationale Veröffentlichungsnummer: WO 2016/097094

(56) Entgegenhaltungen:
- DE-A1-102004 004 000
- DE-A1-102007 058 541
- DE-B3-102007 046 230
- FR-A1- 2 925 644
- GB-A- 2 393 219

## Beschreibung

Die Erfindung betrifft eine Ventilklappenanordnung einer Ventilvorrichtung einer Verbrennungskraftmaschine. Die Erfindung bezieht sich auch auf eine entsprechende Ventilvorrichtung.

Derartige Ventilklappenanordnungen von Ventilvorrichtungen kommen insbesondere bei Verbrennungskraftmaschinen zur Regelung von Gasströmen wie beispielsweise Frischluft- oder Drosselklappen, AGR-Ventile sowie Abgasbremsklappen zum Einsatz. Hier sind es insbesondere Klappenventile, die sich durch eine drehbar im fluidführenden Rohr angeordnete Ventilplatte kennzeichnen.

Klappenventile sind im Allgemeinen aufgebaut wie folgt: der Ventilkörper bzw. das Ventilgehäuse der Ventilvorrichtung enthält einen gasführenden Kanal mit einer Ein- und einer Auslassseite. Durch den Ventilkörper führt, senkrecht zur Strömungsrichtung, eine Welle, an der eine Klappe befestigt ist. Die Welle ist im Gehäuse gelagert und dient zum Öffnen bzw. Schließen des Ventils mittels Drehung bzw. Verschwenkung. Die Betätigung erfolgt in der Regel pneumatisch, hydraulisch oder elektromotorisch.

Klappenventile existieren in unterschiedlichsten Bauformen, mit beispielsweise unterschiedlichen Strömungsquerschnitten, zentrisch oder exzentrisch gelagerten Klappen, unterschiedlichen Klappenformen und Fertigung aus unterschiedlichen Materialien. Sie passen sich somit dem spezifischen Anwendungsfall an. Eine besondere Bauform stellen die Ventile mit zweiflutigen Kanälen in Parallelanordnung dar, wie bespielweise gezeigt in DE29716937U1.

Eine wichtige Bedeutung kommt der Verbindung der Klappe mit der Welle zu. Sie muss die Aktuator- und Gaskräfte auf die Klappe über Lebensdauer übertragen und eine präzise Positionierung der Klappe zulassen um Dichtheit im geschlossenen Zustand zu gewährleisten und ein Klemmen der Klappe gegen die Gehäusewand zu vermeiden.

In Abhängigkeit vom Ventiltyp und Anwendungsbereich existiert eine Auswahl verschiedener Verbindungsmöglichkeiten wie beispielweise das Verschrauben der Klappe in einer geschlitzten oder an einer abgeflachten Welle (DE102012111810A1), das Verstiften einer die Welle umschließenden Klappe mit der Welle selbst (DE112011105111T5) oder das Verschweißen von Klappe und Welle (DE102013113028A1). DE 102004004000 A1 bescheibt eine Ventilklappenanordnung gemäss dem Oberbegriff des Anspruchs 1. Die bekannten Klappe-Wellen-Verbindungen haben gemeinsam, dass die Momentenübertragung unmittelbar durch diese beiden Komponenten erfolgt. D.h., es wird ein Kraft-, Form-, oder Stoffschluss zwischen Welle und Klappe hergestellt. Beispiele dafür sind die erwähnten Schraub- oder Nietverbindungen.

Diese existierenden Verbindungsarten stoßen bei bestimmten Ventiltypen an ihre Grenzen, beispielsweise, wenn die Ventile sehr hohen Temperaturen ausgesetzt sind (Verlust der Schraubenspannung), die Klappe nur von einer Seite zugänglich ist (kein Gegenhalten zum Vernieten möglich) oder sehr hohe Montagegenauigkeit gefordert wird (zur Einhaltung strenger Dichtheitsanforderungen).

Insbesondere bei zweiflutigen Klappenventilen haben Toleranzen bei mechanischer Bearbeitung und Montage große Auswirkungen auf die Dichtheit. Bei zwei auf einer Welle angebrachten Klappen kann daher die bestmögliche Dichtheit beider Klappen im geschlossenen Zustand nur schwer gewährleistet werden.

Daher besteht die Aufgabe der Erfindung darin, die oben genannten Nachteile zu lösen oder im Wesentlichen bedeutend zu verringern

Die Aufgabe wird durch eine Ventilklappenanordnung mit den Merkmalen des Anspruchs 1 gelöst.

Die Aufgabe wird auch durch eine Ventilvorrichtung mit den Merkmalen des Anspruchs 10 gelöst.

Ein Grundgedanke der Erfindung besteht darin, dass ein Nabenelement vorgesehen ist, welches zwischen der Welle und der Ventilklappe angeordnet ist. Das Nabenelement übernimmt die Momentenübertragung von der Welle auf die Ventilklappe.

Unter dem Begriff Nabenelement ist eine Nabe zu verstehen, welche einen Körper aufweist, der in seiner axialen Längsrichtung hier mit einer durchgehenden Öffnung versehen ist. Diese Öffnung dient zur Aufnahme einer Welle, auf welche das Nabenelement aufschiebbar ist. Natürlich kann die Welle auch in die Öffnung eingeschoben werden. Eine Momentenübertragung erfolgt von der Welle in der Öffnung auf das Nabenelement, z.B. über eine geeignete Welle-Nabe-Verbindung.

Demgemäß umfasst eine erfindungsgemäße Ventilklappenanordnung einer Ventilvorrichtung, insbesondere einer Verbrennungskraftmaschine eine um eine Wellenachse drehbare Welle und mindestens eine an der Welle angebrachte Ventilklappe, welche zur Übertragung eines Drehmomentes mit der Welle verbunden ist. Es ist mindestens ein Nabenelement vorgesehen, über welches die mindestens eine Ventilklappe mit der Welle verbunden ist.

Die Vorteile der aufgezeigten Ausführung liegen einer vereinfachten Montage bei der gleichzeitigen und sicheren Erfüllbarkeit sehr hoher Dichtheitsanforderungen.

Dieses bietet auch gegenüber einem Stand der Technik, wobei beispielsweise eine Verbindung von Klappe und Welle mittels eines Stifts erfolgt, bedeutende Vorteile. Denn die Bohrung für den Stift kann erst auf der Montagelinie eingebracht werden, um die Produktionstoleranzen auszugleichen. Die Bohrung sowie die notwendige nachfolgende Reinigung resultieren in hohen Montagekosten, zudem ist eine Welle-Nabe-Verbindung mittels Stift für die Übertragung hoher, stoßbehafteter Momente nur eingeschränkt tauglich.

Eine erfindungsgemäße Ventilvorrichtung, insbesondere einer Verbrennungskraftmaschine, wobei die Welle in einem Gehäuse der Ventilvorrichtung um ihre Wellenachse drehbar gelagert ist, und wobei die mindestens eine Ventilklappe zur Regulierung eines Fluidstroms durch die Ventilvorrichtung vorgesehen ist, weist die oben beschriebene erfindungsgemäße Ventilklappenanordnung auf. Eine solche Ventilvorrichtung kann z.B. auch mit anderen Funktionseinheiten, z.B. anderen Ventilarten, ausgestattet sein. Als Beispiel sei eine Gaszuführeinrichtung genannt, die ein Hauptbestandteil einer PBS (Power Booster System) ist, bei welcher zusätzlich gespeicherte Druckluft in ein Einlassrohr einer Verbrennungsmaschine eingeblasen wird. Dabei kann eine Ventilklappe, welche eine Einlass von Frischluft absperrt bzw. einstellt, durch die erfindungsgemäße Ventilklappenanordnung gebildet sein, wobei die zusätzliche Druckluft durch ein übliches Ventil zuführbar ist. Die Funktion einer solchen Gaszuführeinrichtung ist z.B. in den Dokumenten DE 10 2006 008 783 A1 und DE 10 2006 008 785 A1 ausführlich beschrieben.

Somit weist die Ventilvorrichtung mit der erfindungsgemäßen Ventilklappenanordnung auch deren Vorteil einer sicheren Erfüllbarkeit hoher Dichtheitsanforderungen auf.

In einer Ausführung ist vorgesehen, dass das mindestens eine Nabenelement eine axiale Position der mindestens einen Ventilklappe auf der Welle oder/und einen axialen Abstand zwischen zwei Ventilklappen festlegt. Dadurch ist eine Teilezahl reduziert.

Weiterhin ist das mindestens ein Nabenelement mit der Welle über eine Welle-Nabe-Verbindung drehfest verbunden. Daraus ergibt sich eine einfache und schnelle Montage. Als Welle-Nabe-Verbindung kann eine Formschlussverbindung, z.B. eine bestimmte Profilierung vorgesehen sein, z.B. ein Keilwellenprofil. Natürlich sind auch andere Welle-Nabe-Verbindungen möglich, wie beispielsweise Passfeder, Scheibenfeder, Einlegekeil u.dgl. möglich. Ferner sind Reibschluss-Verbindungen (Klemmsitz, Hohlkeil, Schrumpfsitz usw.) wie auch vorgespannte Formschlussverbindungen möglich. Im Falle der Reibschlussverbindungen und vorgespannter Formschlussverbindungen sind jedoch die hohen Betriebstemperaturen (> 600°C) unbedingt zu beachten.

In einer Ausführung ist das mindestens eine Nabenelement als ein zumindest teilweise dickwandiger Hohlzylinder ausgeführt ist, der einen in seiner Längsachse verlaufenden Profilabschnitt aufweist. Die Wand dieses Hohlzylinders kann auch Aussparungen wie auch hervorstehende Abschnitte aufweisen. Natürlich sind auch andere Formen denkbar, wie bespielsweise Hohlkörper mit elliptischen oder eckigen Querschnitten. Eine zylindrische bzw. elliptische Außenform des Nabenelementes ist im Bereich von Fluidströmungen vorteilhaft, da so Strömungswiderstände verringert sind.

Die mindestens eine Ventilklappe wird somit bei der Montage lediglich auf die Welle aufgeschoben und bleibt zunächst dreh- und damit positionierbar. Nach der Justierung in einer definierten Klappenposition (z.B. geschlossen) wird eine feste Verbindung der Klappen mit dem momentenübertragenden Nabenelement hergestellt. Dies kann beispielsweise durch Schweißen erfolgen. Fertigungstoleranzen von Wellen, Klappen und Gehäuse, die ein vollständiges Schließen aller Klappen verhindern, können so ausgeglichen werden.

Eine formschlüssige drehfeste Verbindung der mindestens einen Ventilklappe mit dem mindestens einen Nabenelement kann beispielsweise mindestens eine Aussparung in der Ventilklappe in Richtung einer Wellenachse und mindestens einen dazu korrespondierenden, in Richtung der Wellenachse hervorstehenden Verbindungsabschnitt des Nabenelementes aufweisen. Damit ist ein leichtes und einfaches Zusammenfügen der Bauteile möglich.

In einer Ausführung kann die mindestens eine Aussparung in einer Projektion auf eine Fläche rechteckig mit parallelen Aussparungsseiten in Richtung der Wellenachse und einer Stoßseite rechtwinklig dazu ausgebildet sein, wobei der mindestens eine hervorstehende Verbindungsabschnitt des zugehörigen Nabenelementes korrespondierend zu der Aussparung in Projektion auf eine Fläche ausgebildet ist. Selbstverständlich sind auch andere geometrische Formen von Aussparung und Verbindungsabschnitt möglich. Weiterhin ist auch eine stirnseitige Verzahnung möglich, wie z.B. Hirth-Verzahnung. Aber auch klauenartige Kupplungsverbindungen sind denkbar.
Es ist auch möglich, dass ein Nabenabschnitt der Ventilklappe nicht umlaufend ausgebildet ist, sondern eine Art Halbschale mit halbkreisförmigem Querschnitt bildet. In diesem Fall kann die Ventilklappe auf das Nabenelement aufgelegt werden, wobei eine formschlüssige Verbindung, z.B. in Schwalbenschwanzform möglich ist, die nach Zusammenbau gesichert wird, z.B. durch Verschweißen.

In einer weiteren Ausführung kann mindestens ein Kraftspeicherelement mit federelastischen Eigenschaften zwischen dem mindestens einen Nabenelement und der Welle angeordnet sein. Dadurch werden Fertigungstoleranzen sowie Verschleißerscheinungen oder Verschmutzung ausgeglichen und der Klappe-Wand-Kontakt aller Klappen im geschlossenen Zustand sichergestellt, um bestmögliche Abdichtung zu erreichen.

Die Momentenübertragung kann in diesem Fall beispielsweise mittels eines Formschlusses mit zwischengeschaltetem Federelement erfolgen.

Alternativ kann die mindestens eine Ventilklappe mit dem mindestens einen Nabenelement formschlüssig oder/und stoffschlüssig drehfest verbunden sein.

Zusätzlich dazu oder separat kann mindestens ein Kraftspeicherelement mit federelastischen Eigenschaften zwischen dem mindestens einen Nabenelement und der mindestens einen Ventilklappe angeordnet sein.

In einer Ausführung der Ventilvorrichtung kann ein Verschwenkwinkel der Welle um ihre Wellenachse bzw. ein Aktuatorstellweg durch einen Kontakt der mindestens einen Ventilklappe mit einem zugehörigen Abschnitt des Gehäuses der Ventilvorrichtung begrenzt sein. Alternativ kann ein Verschwenkwinkel der Welle um ihre Wellenachse bzw. ein Aktuatorstellweg durch mindestens einen externen Anschlag begrenzt sein. Und eine noch weitere Ausführung sieht vor, dass ein Verschwenkwinkel der Welle um ihre Wellenachse bzw. ein Aktuatorstellweg in einer Endstellung durch einen Kontakt der mindestens einen Ventilklappe mit einem zugehörigen Abschnitt des Gehäuses der Ventilvorrichtung begrenzt ist, und der anderen Endstellung durch einen zusätzlichen externen Anschlag begrenzt ist. Daraus ergibt sich ein kompakter Aufbau.

Die Ventilvorrichtung kann in einer weiteren Ausführung mindestens eine zweiflutige Ventilvorrichtung sein. So ist ein großer Einsatzbereich ermöglicht.

Die Ventilvorrichtung kann auch als ein Abgasdrosselventil, ein Abgasrückführventil und/oder ein Frischluftdrosselventil einer Verbrennungskraftmaschine ausgebildet sein. So kann z.B. eine Typenreduzierung zumindest der Ventilklappenanordnung bei einer Verbrennungskraftmaschine möglich sein.

Die Erfindung ermöglicht vorteilhaft die Behebung der Nachteile von Verschraubungen und Vernietungen der Ventilklappe mit der Welle.

Die Ventile können nun sehr hohen Temperaturen ausgesetzt sein (ein Verlust der Schraubenspannung entfällt, da keine Schrauben vorhanden sind), die Klappe kann nur von einer Seite zugänglich sein (ein Gegenhalten zum Vernieten ist nicht erforderlich). Es ergibt sich eine sehr hohe Montagegenauigkeit zur Einhaltung strenger Dichtheitsanforderungen.

Es kann eine bedeutend verbesserte Dichtheit beider Klappen im geschlossenen Zustand gewährleistet werden.

Eine Anwendungen bei sehr hohen Temperaturen (> 600°C) und einseitig zugänglichen Klappen wird ermöglicht.

Die Erfindung wird nun anhand von Ausführungsbeispielen mit Bezug auf die beigefügten Zeichnungen näher erläutert. Hierbei zeigt:
- Fig. 1: eine schematische, perspektivische Darstellung eines Ausführungsbeispiels einer erfindungsgemäßen Ventilklappenanordnung;
- Fig. 2: eine schematische, perspektivische Darstellung einer Variante des Ausführungsbeispiels nach Fig. 1;
- Fig. 3: eine schematische, perspektivische Darstellung einer weiteren Variante des Ausführungsbeispiels nach Fig. 1; und
- Fig. 4: eine schematische Darstellung einer Verbrennungskraftmaschine mit einem Abgasturbolader und erfindungsgemäßen Ventilvorrichtungen mit erfindungsgemäßen Ventilklappenanordnungen.

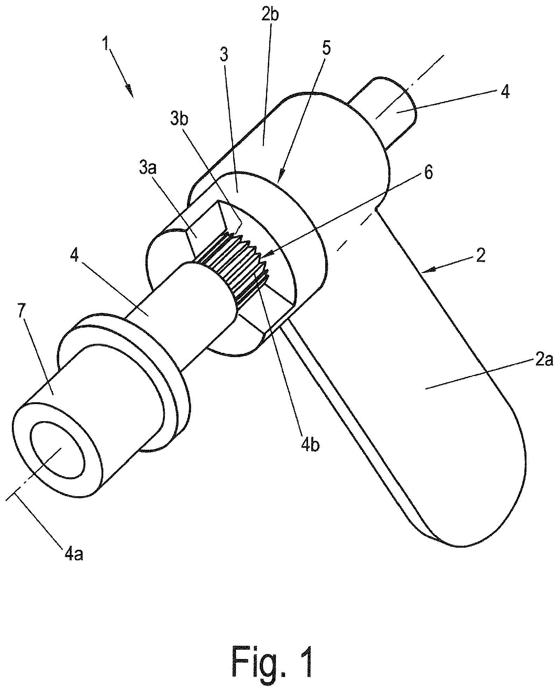

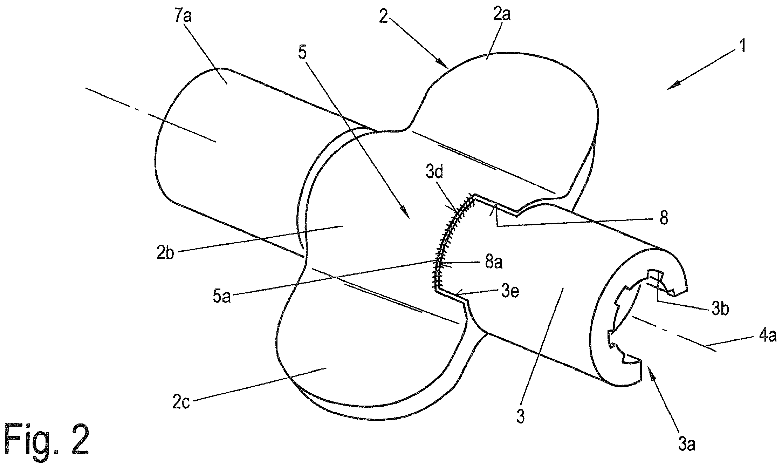

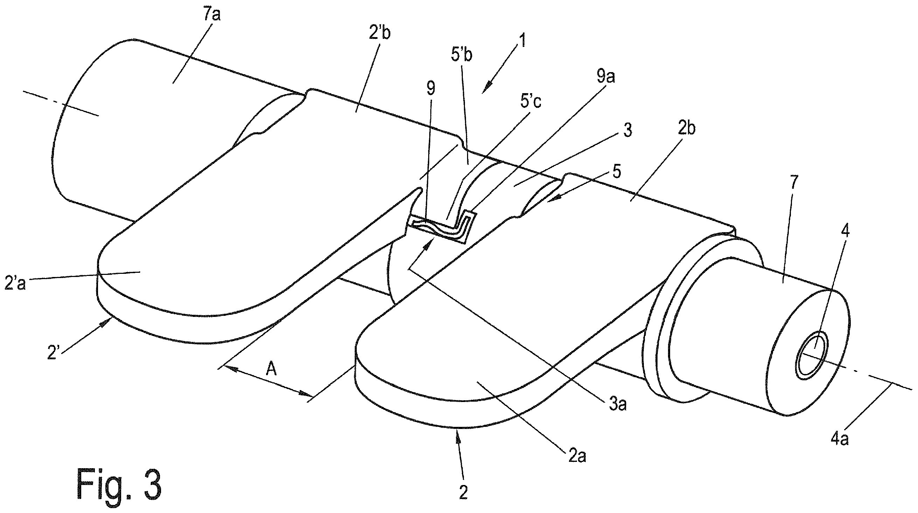

In Fig. 1 ist eine schematische, perspektivische Darstellung eines Ausführungsbeispiels einer erfindungsgemäßen Ventilklappenanordnung 1 dargestellt. Fig. 2 zeigt eine schematische, perspektivische Darstellung einer Variante des Ausführungsbeispiels nach Fig. 1, und Fig. 3 stellt eine schematische, perspektivische Darstellung einer weiteren Variante des Ausführungsbeispiels nach Fig. 1 dar.

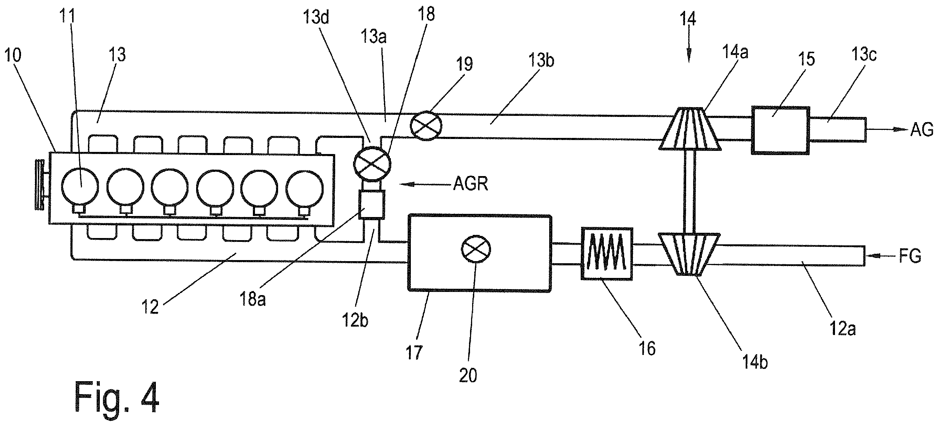

Eine solche Ventilklappenanordnung 1 wird beispielsweise in Ventilmodulen bzw. Ventilvorrichtungen für die Regelung einer Abgasrückführung AGR einer Verbrennungskraftmaschine 10 eingesetzt, was unten noch im Zusammenhang mit Fig. 4 angegeben wird. In diesem Beispiel ist die Ventilvorrichtung zweiflutig ausgeführt und weist, wie in Fig. 3 zu sehen ist, zwei Ventilklappen 2, 2' auf, von denen eine zur Verdeutlichung der Funktion aus der Ansicht nach Fig. 1 entfernt ist.

Die Ventilklappen 2, 2' sind auf einer Welle 4 mit einer Wellenachse 4a angeordnet. Die Welle 4 ist in einem Gehäuse der Ventilvorrichtung mit Wellenlagern 7, 7a drehbar gelagert. An der Welle 4 ist mindestens eine Ventilklappe 2, 2', 2b befestigt und wird über ein Akuatormoment, das von einem nicht gezeigten Aktuator (z.B. elektrisch, elektromagnetisch, pneumatisch, hydraulisch o.dgl.) auf die Welle 4 aufgebracht wird, zur Positionierung beaufschlagt. Die mindestens eine Ventilklappe 2, 2', 2b reguliert dabei einen Fluidstrom innerhalb der Ventilvorrichtung. Ein Regulieren des Fluidstroms ist über eine geschlossene, eine geöffnete Stellung und verschiedene Zwischenstellungen möglich.

Das Gehäuse und die Ventilvorrichtung sind nicht dargestellt, jedoch anhand der Beispiele der oben bereits angegebenen Dokumente DE29716937U1, DE102012111810A1, DE112011105111T5, DE102013113028A1 leicht vorstellbar.

Jede Ventilklappe 2, 2' weist einen flügelartigen Klappenabschnitt 2a, 2'a, 2c auf, der jeweils an seinem freien Ende abgerundet ist und an dem anderen Ende mit einem Nabenabschnitt 2b, 2'b fest verbunden ist. Der Nabenabschnitt 2b, 2'b weist hier eine hohlzylindrige Form auf.

Zwischen den Ventilklappen 2, 2' ist ein Nabenelement 3 auf der Welle 4 angeordnet. Das Nabenelement 3 ist in diesem Beispiel als ein dickwandiger Hohlzylinder ausgeführt. Es sind natürlich auch andere Ausgestaltungen möglich.

Auf der Innenseite des Nabenelementes 3 ist ein innerer Profilabschnitt 3b eingeformt, welcher z.B. ein Zahn- oder Keilprofil aufweisen kann. Dieses Profil des inneren Profilabschnitts 3b des Nabenelementes 3 korrespondiert mit einem Außenprofil eines Wellenprofilabschnitts 4b der Welle 4. Das Nabenelement 3 ist derart auf der Welle 4 aufbracht, dass der innere Profilabschnitt 3b des Nabenelementes 3 mit dem Außenprofil des Wellenprofilabschnitts 4b der Welle 4 in Eingriff steht und so eine Wellennabenverbindung 6 für eine Drehmomentübertragung zwischen Welle 4 und Nabenelement 3 sicherstellt. Gleichermaßen sind aber auch andere Welle-Nabe-Verbindungen 6 denkbar wie z.B. Polygonprofile, Verstiftung- oder Verschraubungen, Verschweißen oder Löten. Hierbei ist jedoch besonders die jeweilige hohe Betriebstemperatur (> 600°C) zu beachten, wobei die jeweiligen Wellen-Nabe-Verbindung 6 entsprechend auszulegen ist.

Das Nabenelement 3 weist hier segmentförmige Aussparungen 3a auf, welche der Aufnahme entsprechender Gegenstücke an der Ventilklappe 2, 2' dienen. Unter dem Begriff Gegenstück ist ein Bereich im Nabenabschnitt 2b, 2'b der Ventilklappe 2, 2' zu verstehen, welcher mit der Aussparung 3a korrespondiert. Die Aussparungen 3a des Nabenelementes 3 werden als vorteilhafte Ausgestaltung betrachtet, sind aber nicht Vorrausetzung für die Umsetzung der Klappenanbindung im Sinne der Erfindung.

Eine Begrenzung eines Aktuatorstellwegs, d.h. eines Verschwenkwinkels der Welle 4 mit der Ventilklappe 2, 2', 2c kann durch eine Endstellung durch einen Kontakt des Klappenabschnitts 2a, 2'a, 2c mit einem entsprechenden Abschnitt des Gehäuses der Ventilvorrichtung ausgebildet sein. Es ist aber auch möglich, dass ein externer Anschlag innerhalb oder/und außerhalb des Gehäuses der Ventilvorrichtung zur Begrenzung des Aktuatorstellwegs vorgesehen ist. So kann z.B. die Begrenzung des Aktuatorstellwegs in einer Endstellung durch den Kontakt Ventilklappe 2, 2', 2c und Gehäuse und in der anderen Endstellung durch einen zusätzlichen externen Anschlag ermöglicht sein.

In Fig. 1 ist die dargestellte Ventilklappe 2 auf der in der Fig. 1 gezeigten rechten Seite des Nabenelementes 3 mit ihrem Nabenabschnitt 2b auf eine rechte Aussparung 3a, die hier nicht sichtbar ist, von rechts aufgeschoben, wobei die linke Seite des Nabenabschnitts 2b der Ventilklappe 2 die rechte Aussparung 3a des Nabenelementes 3 umschließt. Das Nabenelement 3 und der Nabenabschnitt 2b der Ventilklappe 2 sind in einer Verbindung 5, z.B. Verstiftung- oder Verschraubungen, Verschweißen oder Löten, fest verbunden. Diese Verbindung wird vorteilhaft erst bei der Montage nach Ausrichtung von Nabenelement 3 und Ventilklappe 2, 2' erstellt. Auf der linken Seite des Nabenelementes 3 ist die Aussparung 3a in Fig. 1 sichtbar, da die linke Ventilklappe 2' nicht gezeigt ist.

Werden die segmentförmigen Aussparungen 3a und ihre Gegenstücke an den Ventilklappen 2, 2' als Passung ausgeführt, kann damit eine formschlüssige Verbindung zwischen jeder Ventilklappe 2, 2' und dem Nabenelement 3 ohne weitere Befestigungsmaßnahmen dargestellt werden.

Neben der Funktion der Drehmomentübertragung zwischen der Welle 4 und der Ventilklappe 2, 2' kann das Nabenelement 3 auch zusätzlich dazu eingesetzt werden, um eine axiale Positionierung bei einer einflutigen Ventilklappe 2, 2' beziehungsweise eine axiale Distanz A (Fig. 3) zwischen den Ventilklappen 2 und 2' bei einer zweiflutigen Anordnung festzulegen.

Fig. 2 zeigt eine Variante mit zwei Ventilklappen 2 und 2c, die radial gegenüberstehend mit einem gemeinsamen Nabenabschnitt 2b verbunden sind. In dieser Variante weist der gemeinsame Nabenabschnitt 2b Ventilklappen 2, 2c eine Aussparung 8 auf. Diese Aussparung ist in einer Projektion auf eine Fläche rechteckig mit parallelen Aussparungsseiten in Richtung der Wellenachse 4a und einer Stoßseite 8a rechtwinklig dazu ausgebildet. Das zugehörige Nabenelement 3 weist ein mit dieser Aussparung 8 des Nabenabschnitts 2b korrespondierendes Gegenstück auf. Dieses Gegenstück umfasst einen in Projektion auf eine Fläche rechtwinkligen Verbindungsabschnitt 3c, welcher von dem Nabenelement 3 in Richtung der Wellenachse 4a hervorsteht.

Diese ebenfalls vorteilhafte Ausführung ermöglicht die Zugänglichkeit der Fügestelle mit der Verbindung 5 im montieren Zustand und damit beispielsweise das Verschweißen von Nabenabschnitt 2b der Ventilklappe 2, 2c und Nabenelement 3 in einer bei der Montage definierten Position. Hier ist die Verbindung 5 mit einer Schweißnaht 5a zwischen der Stoßseite 8a der Aussparung 8 des Nabenabschnitts 2b und dem Rand 3d des Verbindungsabschnitts 3c des Nabenelementes 3 beispielhaft dargestellt.

Die in Fig. 2 gezeigte rechte Seite des Nabenelementes 3 weist hier die Aussparung 3a mit dem inneren Profilabschnitt 3b für eine weitere, nicht dargestellte zweite Ventilklappe 2, 2c auf.

In der weiteren Variante in Fig. 3 sind zwei Ventilklappen 2, 2' gezeigt. Die rechte Ventilklappe 2 ist mit ihrem Nabenabschnitt 2b mit dem Nabenelement 3 in einer wie oben beschriebenen Verbindung 5 über eine nicht sichtbare rechte Aussparung 3a des Nabenelementes 3 und das zugehörige Gegenstück des Nabenabschnitts 2b, das ebenfalls nicht sichtbar, aber vorstellbar ist, verbunden. Die linke Ventilklappe 2' steht mit ihrem Gegenstück, hier einem Koppelabschnitt 5'b und einer Aussparung 5'c, mit der Aussparung 3a der linken Seite des Nabenelementes 3 in Eingriff.

Die segmentförmigen Aussparungen 3a in dem Nabenelement 3 stellen jeweils in Eingriff mit dem Gegenstück des jeweils zugeordneten Nabenabschnitts 2b der Ventilklappe 2, 2' die korrekte Montage des Zusammenbaus sicher. In dieser Variante dienen die segmentförmigen Aussparungen 3a außerdem zur Aufnahme von Kraftspeicherelementen 5, die z.B. als Federelemente ausgebildet sind. Die Kraftspeicherelemente 5 sind hier in dem Nabenelement 3 in einer Aufnahme 9a angeordnet.

Ein solches Kraftspeicherelement 5 ermöglicht dabei eine Relativbewegung von der Ventilklappe 2' und dem Nabenelement 3 zueinander und stellt so einen Klappenabschnitt (2'a)-Wand-Kontakt in der geschlossenen Position im Gehäuse der zugehörigen Ventilvorrichtung sicher. Die Kraftspeicherelemente 5 können durch die Montage vorgespannt werden. Anhängig von der Anwendung kann es sich als vorteilhaft erweisen, nur eine oder alle Ventilklappen 2, 2' mit Kraftspeicherelementen 5 auszustatten. Alternativ kann es vorteilhaft sein, das Kraftspeicherelement 5 dem Momentfluss Welle 4 - Nabenelement 3 zwischenzuschalten; es wirkt dann auf alle Ventilklappen 2, 2' gleichermaßen.

Das momentenübertragende Nabenelement 4 ist mit den Kraftspeicherelementen 9 versehen, wobei Fertigungstoleranzen sowie Verschleißerscheinungen oder Verschmutzung ausgeglichen werden und der Ventilklappe-Wand-Kontakt aller Ventilklappe 2, 2', 2c im geschlossenen Zustand, d.h. im geschlossenen Zustand der zugehörigen Ventilvorrichtung, sicherstellt, dass eine bestmögliche Abdichtung realisiert ist. Die Momentenübertragung kann in diesem Fall beispielsweise mittels eines Formschlusses mit zwischengeschaltetem Kraftspeicherelementen 9 erfolgen

Das von einem Aktuator auf die Welle 4 aufgebrachte Drehmoment wird über die Welle-Nabe-Verbindung 6 von der Welle 4 auf das Nabenelement 3 und von dem Nabenelement 3 über die jeweilige Verbindung 5 auf den Nabenabschnitt 2b der zugehörigen Ventilklappe 2, 2', 2c übertragen

Die Ventilklappen 2, 2', 2c und das Nabenelement 3 werden bei der Montage lediglich auf die Welle 4 aufgeschoben, wobei die Ventilklappen 2, 2', 2c zunächst dreh- und damit positionierbar bleiben. Nach der Justierung in einer definierten Klappenposition (z.B. geschlossen) wird eine feste Verbindung der Ventilklappen 2, 2', 2c mit dem momentenübertragenden Nabenelement 3 hergestellt. Dies kann beispielsweise durch Schweißen erfolgen. Fertigungstoleranzen von Welle 4, Ventilklappen 2, 2', 2c und Gehäuse, die ein vollständiges Schließen aller Ventilklappen 2, 2', 2c verhindern, können so ausgeglichen werden.

Schließlich zeigt Fig. 4 eine schematische Darstellung einer Verbrennungskraftmaschine 1 mit einem Abgasturbolader 14 und erfindungsgemäßen Ventilvorrichtungen 18, 19, 20 mit erfindungsgemäßen Ventilklappenanordnungen 1.

Hiermit sollen mögliche, beispielhafte Einsatzfälle von erfindungsgemäßen Ventilvorrichtungen mit den oben beschriebenen erfindungsgemäßen Ventilklappenanordnungen 1 aufgezeigt werden. Die erfindungsgemäßen Ventilvorrichtungen können natürlich einzeln oder auch in Kombinationen eingesetzt werden.

Die Verbrennungskraftmaschine 1 ist ein Dieselmotor mit sechs Zylindern 11, einer Ansaugleitung 12 und einer Abgasleitung 13. Der Abgasturbolader 14 weist eine Abgasturbine 14a auf, die über eine Welle mit einem Verdichter 14b gekoppelt ist. Die Ansaugleitung 12 ist über eine Gaszuführeinrichtung 17 mit dem Verdichter 14b des Abgasturboladers 14 über einen Ladelulftkühler 16 verbunden. Der Verdichter 14b des Abgasturboladers 14 ist an einem Lufteinlass 12a für Frischgas FG angeschlossen. Unter dem Begriff Frischgas ist hier auch Frischluft aus der Atmosphäre zu verstehen. In dieser Rohrleitung kann auch ein (nicht gezeigter) Luftfilter eingesetzt sein.

In der Abgasleitung 13 ist zunächst ein Abzweig für eine Abgasrückführleitung 13d und ein Abgasleitungsabschnitt 13a vorgesehen. Der Abgasleitungsabschnitt 13a ist stromabwärts an ein Abgasdrosselventil 19, das auch als Abgasbremsklappe bezeichnet wird, einer so genannten Motorbremse angeschlossen. Das Abgasdrosselventil 19 ist dann über einen weiteren Abgasleitungsabschnitt 13b stromabwärts mit der Abgasturbine 14a des Abgasturboladers 14 verbunden, an welche dann stromabwärts ein Partikelfilter 15 und ein Abgasauslass 13c für Abgas AG angeordnet ist. Die Abgasturbine 14a wird von dem Abgas AG angetrieben. Diese Drehbewegung der Abgasturbine 14a wird über auf den Verdichter 14b übertragen.

Die Abgasrückführleitung 13d gehört zu einer Abgasrückführungseinrichtung AGR. Die Abgasrückführungseinrichtung AGR weist ein Abgasrückführventil 19 auf, dass eingangsseitig mit der Abgasrückführleitung 13d kommuniziert und ausgangsseitig an über einen Wärmetauscher 18a und einen Einleitungsabschnitt 12b mit der Ansaugleitung 12 verbunden ist.

Die Gaszuführeinrichtung 17 ist über einen Frischgaseinlass mit dem Ladeluftkühler 16 stromabwärts des Verdichters 14b zum Einlass von verdichtetem und ggf. gekühltem Frischgas FG aus dem Lufteinlass 12a verbunden. Der Frischgaseinlass weist hier ein Frischluftdrosselventil 20 auf. Ein Auslass der Gaszuführeinrichtung 17 ist in der Nähe des Einleitungsabschnitts 12b der Abgasrückführungseinrichtung AGR an der Ansaugleitung 12 angeschlossen.

Außerdem ist die Gaszuführeinrichtung 17 zur Zuführung von zusätzlichem Gas, z.B. Druckluft, in die Ansaugleitung 12 vorgesehen und ist in diesem Beispiel ein Frischgasleitungsabschnitt als Bestandteil eines so genannten Power Booster Systems (PBS), wie er in der DE 10 2006 008 783 A1 und DE 10 2006 008 785 A1 im Zusammenhang mit einer zugehörigen Drucklufterzeugung beschrieben wird. Das zusätzliche Gas kann hier entweder Druckluft oder rückgeführtes Abgas sein.

Das Abgasdrosselventil 19, das Abgasrückführventil 19 und/oder das Frischluftdrosselventil 20 sind hier als beispielhafte erfindungsgemäße Ventilvorrichtungen 18, 19, 20 jeweils mit der erfindungsgemäßen Ventilklappenanordnung 1 ausgebildet.

Da die Ventilklappenanordnung 1 der vorliegenden Erfindung so gestaltet ist, dass eine hohe Dichtheit der jeweiligen Ventilklappe 2, 2', 2c im geschlossenen Zustand bei gleichzeitiger einfacher Montage erreicht wird, ist diese, wie vorhergehend beschrieben, dazu geeignet, in den oben erwähnten Motorklappenventilen, nämlich den beispielhaften erfindungsgemäßen Ventilvorrichtungen 18, 19, 20, eingesetzt zu werden. Damit ist eine gewerbliche Anwendbarkeit gegeben.

Die Erfindung wird nicht durch das oben beschriebene Ausführungsbeispiel eingeschränkt, sondern ist im Rahmen der beigefügten Ansprüche modifizierbar.

So ist es denkbar, dass die Aussparung 8, 8a des Nabenabschnitts 2b andere geometrische Formen aufweist, z.B. dreieckig oder eine zur Wellenachse 4a schräg angeordnete Stoßseite 8a.

Die Kraftspeicherelemente 5 können beispielsweise auch Kombinationen aus verschiedenen Federelementen sein.

Die Anzahl der Ventilklappen 2, 2' kann auch mehr als zwei betragen. Natürlich ist auch nur eine Ventilklappe 2, 2' möglich.

Es ist auch denkbar, dass der Nabenabschnitt 2b der Ventilklappe 2 nicht umlaufend ausgebildet ist, sondern eine Art Halbschale mit halbkreisförmigem Querschnitt bildet. In diesem Fall kann die Ventilklappe 2 auf das Nabenelement 3 aufgelegt werden, wobei eine formschlüssige Verbindung, z.B. in Schwalbenschwanzform möglich ist, die nach Zusammenbau gesichert wird, z.B. durch Verschweißen.

### Bezugszeichenliste

- 1: Ventilklappenanordnung
- 2, 2': Ventilklappe
- 2a, 2'a, 2c: Klappenabschnitt
- 2b, 2'b: Nabenabschnitt
- 3: Nabenelement
- 3a: Aussparung
- 3b: Profilabschnitt
- 3c: Verbindungsabschnitt
- 3d: Rand
- 3e: Seitenabschnitt
- 4: Welle
- 4a: Wellenachse
- 4b: Wellenprofilabschnitt
- 5: Verbindung
- 5a: Schweißnaht
- 5'b: Koppelabschnitt
- 5'c: Aussparung
- 6: Welle-Nabe-Verbindung
- 7, 7a: Wellenlager
- 8: Aussparung
- 8a: Stoßseite
- 9: Kraftspeicherelement
- 9a: Aufnahme
- 10: Verbrennungskraftmaschine
- 11: Zylinder
- 12: Ansaugleitung
- 12a: Lufteinlass
- 12b: Einleitung
- 13: Abgasleitung
- 13a, b: Abgasleitungsabschnitt
- 13c: Abgasauslass
- 13d: Abgasrückführleitung
- 14: Abgasturbolader
- 14a: Abgasturbine
- 14b: Verdichter
- 15: Partikelfilter
- 16: Ladeluftkühler
- 17: Gaszuführeinrichtung
- 18: Abgasrückführventil
- 18a: Wärmetauscher
- 19: Abgasdrosselventil
- 20: Frischluftdrosselventil
- A: Axiale Distanz
- AG: Abgas
- AGR: Abgasrückführeinrichtung
- FG: Frischgas

## Patentansprüche

1. Ventilklappenanordnung (1) einer Ventilvorrichtung, insbesondere einer Verbrennungskraftmaschine (10), aufweisend eine um eine Wellenachse (4a) drehbare Welle (4) und mindestens eine an der Welle (4) angebrachte Ventilklappe (2, 2', 2c), welche zur Übertragung eines Drehmomentes mit der Welle (4) verbunden ist,
wobei mindestens ein momentenübertragendes Nabenelement (3) vorgesehen ist, über welches die mindestens eine Ventilklappe (2, 2', 2c) mit der Welle (4) verbunden ist,
**dadurch gekennzeichnet, dass**
die mindestens eine Ventilklappe (2, 2', 2c) und das mindestens eine momentenübertragende Nabenelement (3) auf die Welle (4) aufgeschoben sind, wobei die mindestens eine Ventilklappe (2, 2', 2c) zunächst drehbar ist, und wobei nach einer Justierung in einer definierten Klappenposition eine feste Verbindung der mindestens einen Ventilklappe (2, 2', 2c) und des mindestens einen momentenübertragenden Nabenelementes (3) hergestellt ist.

2. Ventilklappenanordnung (1) nach Anspruch 1, **dadurch gekennzeichnet, dass** das mindestens eine Nabenelement (3) eine axiale Position der mindestens einen Ventilklappe (2, 2', 2c) auf der Welle (4) oder/und einen axialen Abstand (A) zwischen zwei Ventilklappen (2, 2', 2c) festlegt.

3. Ventilklappenanordnung (1) nach Anspruch 1 oder 2, **dadurch gekennzeichnet, dass** das mindestens ein Nabenelement (3) mit der Welle (4) über eine Welle-Nabe-Verbindung (6) drehfest verbunden ist.

4. Ventilklappenanordnung (1) nach Anspruch 3, **dadurch gekennzeichnet, dass** das mindestens eine Nabenelement (3) als ein zumindest teilweise dickwandiger Hohlzylinder ausgeführt ist, der einen in seiner Längsachse verlaufenden Profilabschnitt (3b) aufweist.

5. Ventilklappenanordnung (1) nach einem der vorhergehenden Ansprüche **dadurch gekennzeichnet, dass** mindestens ein Kraftspeicherelement (9) mit federelastischen Eigenschaften zwischen dem mindestens einen Nabenelement (3) und der Welle (4) angeordnet ist.

6. Ventilklappenanordnung (1) nach einem der vorhergehenden Ansprüche, **dadurch gekennzeichnet, dass** die mindestens eine Ventilklappe (2, 2', 2c) mit dem mindestens einen Nabenelement (3) formschlüssig oder/und stoffschlüssig drehfest verbunden ist.

7. Ventilklappenanordnung (1) nach Anspruch 6, **dadurch gekennzeichnet, dass** eine formschlüssige drehfeste Verbindung (5) der mindestens einen Ventilklappe (2, 2', 2c) mit dem mindestens einen Nabenelement (3) durch mindestens eine Aussparung (8) in der Ventilklappe (2) in Richtung einer Wellenachse (4a) und mindestens einen dazu korrespondierenden, in Richtung der Wellenachse (4a) hervorstehenden Verbindungsabschnitt (3c) des Nabenelementes (3) aufweist.

8. Ventilklappenanordnung (1) nach Anspruch 7, **dadurch gekennzeichnet, dass** die mindestens eine Aussparung (8) in einer Projektion auf eine Fläche rechteckig mit parallelen Aussparungsseiten in Richtung der Wellenachse (4a) und einer Stoßseite (8a) rechtwinklig dazu ausgebildet ist, wobei der mindestens eine hervorstehende Verbindungsabschnitt (3c) des zugehörigen Nabenelementes (3) korrespondierend zu der Aussparung (8) in Projektion auf eine Fläche ausgebildet ist.

9. Ventilklappenanordnung (1) nach einem der Ansprüche 1 bis 5, **dadurch gekennzeichnet, dass** mindestens ein Kraftspeicherelement (9) mit federelastischen Eigenschaften zwischen dem mindestens einen Nabenelement (3) und der mindestens einen Ventilklappe (2, 2', 2c) angeordnet ist.

10. Ventilvorrichtung, insbesondere einer Verbrennungskraftmaschine (10), mit mindestens einer Ventilklappenanordnung (1) nach einem der vorgehenden Ansprüche, wobei die Welle (4) in einem Gehäuse der Ventilvorrichtung um ihre Wellenachse (4a) drehbar gelagert ist, und wobei die mindestens eine Ventilklappe (2, 2', 2c) zur Regulierung eines Fluidstroms durch die Ventilvorrichtung vorgesehen ist.

11. Ventilvorrichtung nach Anspruch 10, **dadurch gekennzeichnet, dass** ein Verschwenkwinkel der Welle (4) um ihre Wellenachse (4a) bzw. ein Aktuatorstellweg durch einen Kontakt der mindestens einen Ventilklappe (2, 2', 2c) mit einem zugehörigen Abschnitt des Gehäuses der Ventilvorrichtung begrenzt ist.

12. Ventilvorrichtung nach Anspruch 10, **dadurch gekennzeichnet, dass** ein Verschwenkwinkel der Welle (4) um ihre Wellenachse (4a) bzw. ein Aktuatorstellweg durch mindestens einen externen Anschlag begrenzt ist.

13. Ventilvorrichtung nach Anspruch 10, **dadurch gekennzeichnet, dass** ein Verschwenkwinkel der Welle (4) um ihre Wellenachse (4a) bzw. ein Aktuatorstellweg in einer Endstellung durch einen Kontakt der mindestens einen Ventilklappe (2, 2', 2c) mit einem zugehörigen Abschnitt des Gehäuses der Ventilvorrichtung begrenzt ist, und der anderen Endstellung durch einen zusätzlichen externen Anschlag begrenzt ist.

14. Ventilvorrichtung nach einem der Ansprüche 10 bis 13, **dadurch gekennzeichnet, dass** die Ventilvorrichtung mindestens eine zweiflutige Ventilvorrichtung ist.

15. Ventilvorrichtung nach einem der Ansprüche 10 bis 14, **dadurch gekennzeichnet, dass** die Ventilvorrichtung als ein Abgasdrosselventil (19), ein Abgasrückführventil (19) und/oder ein Frischluftdrosselventil (20) einer Verbrennungskraftmaschine (10) ausgebildet ist.

## Claims

1. Valve flap assembly (1) of a valve device, in particular of an internal combustion engine (10), comprising a shaft (4) rotatable about a shaft axis (4a) and at least one valve flap (2, 2', 2c) mounted on the shaft (4) and connected to the shaft (4) for the transmission of a torque,
wherein at least one torque-transmitting hub element (3) is provided, via which the at least one valve flap (2, 2', 2c) is connected to the shaft (4),
**characterised in that**
the at least one valve flap (2, 2', 2c) and the at least one torque-transmitting hub element (3) are pushed onto the shaft (4), wherein the at least one valve flap (2, 2', 2c) is initially rotatable, and wherein, following an adjustment in a defined flap position, a fixed connection is established between the at least one valve flap (2, 2', 2c) and the at least one torque-transmitting hub element (3).

2. Valve flap assembly (1) according to claim 1, **characterised in that** the at least one hub element (3) fixes an axial position of the at least one valve flap (2, 2', 2c) on the shaft (4) and/or an axial distance (A) between two valve flaps (2, 2', 2c).

3. Valve flap assembly (1) according to claim 1 or 2, **characterised in that** the at least one hub element (3) is non-rotatably connected to the shaft (4) via a shaft-to-hub connection (6).

4. Valve flap assembly (1) according to claim 3, **characterised in that** the at least one hub element (3) is designed as an at least partially thick-walled hollow cylinder having a profile section (3b) extending in its longitudinal axis.

5. Valve flap assembly (1) according to any of the preceding claims, **characterised in that** at least one energy storage element (9) with spring-elastic properties is located between the at least one hub element (3) and the shaft (4).

6. Valve flap assembly (1) according to any of the preceding claims, **characterised in that** the at least one valve flap (2, 2', 2c) is non-rotatably connected to the at least one hub element (3) positively and/or by adhesive force.

7. Valve flap assembly (1) according to claim 6, **characterised in that** a positive, non-rotatable connection (5) between the at least one valve flap (2, 2', 2c) and the at least one hub element (3) comprises at least one recess (8) in the valve flap (2) in the direction of a shaft axis (4a) and at least one corresponding connecting section (3c) of the hub element (3) projecting in the direction of the shaft axis (4a).

8. Valve flap assembly (1) according to claim 7, **characterised in that** the at least one recess (8) is, in a projection onto a surface, designed rectangular with parallel recess sides in the direction of the shaft axis (4a) and an abutting side (8a) perpendicular thereto, the at least one projecting connecting section (3c) of the associated hub element (3) being designed to correspond to the recess (8) in a projection onto a surface.

9. Valve flap assembly (1) according to any of claims 1 to 5, **characterised in that** at least one energy storage element (9) with spring-elastic properties is located between the at least one hub element (3) and the at least one valve flap (2, 2', 2c).

10. Valve device, in particular of an internal combustion engine (10), comprising at least one valve flap assembly (1) according to any of the preceding claims, wherein the shaft (4) is mounted in a housing of the valve device and rotatable about its shaft axis (4a), and wherein the at least one valve flap (2, 2', 2c) is provided for regulating a fluid flow through the valve device.

11. Valve device according to claim 10, **characterised in that** a pivoting angle of the shaft (4) about its shaft axis (4a) or an actuator travel is limited by a contact of the at least one valve flap (2, 2', 2c) with an associated section of the housing of the valve device.

12. Valve device according to claim 10, **characterised in that** a pivoting angle of the shaft (4) about its shaft axis (4a) or an actuator travel is limited by at least one external stop.

13. Valve device according to claim 10, **characterised in that** a pivoting angle of the shaft (4) about its shaft axis (4a) or an actuator travel is limited in one end position by a contact of the at least one valve flap (2, 2', 2c) with an associated section of the housing of the valve device and in the other end position by an additional external stop.

14. Valve device according to claim any of claims 10 to 13, **characterised in that** the valve device is at least a double-flow valve device.

15. Valve device according to claim any of claims 10 to 14, **characterised in that** the valve device is designed as an exhaust gas restrictor valve (19) an exhaust gas recirculation valve (19) and/or a fresh air restrictor valve (20) of an internal combustion engine (10).

## Revendications

1. Agencement (1) de clapets de soupape d'un système de soupape, notamment d'un moteur (10) à combustion interne, comportant un arbre (4) tournant autour d'un axe (4a) d'arbre et au moins un clapet (2, 2', 2c) de soupape, qui est mis sur l'arbre (4) et qui est relié à l'arbre (4) pour la transmission d'un couple,
dans lequel il est prévu au moins un élément (3) de moyeu, qui transmet un couple et par lequel le au moins un clapet (2, 2', 2c) de soupape est relié à l'arbre (4), **caractérisé en ce que**
le au moins un clapet (2, 2', 2c) de soupape et le au moins un élément (3) de moyeu transmettant un couple sont enfilés sur l'arbre (4), le au moins un clapet (2, 2', 2c) de soupape pouvant d'abord tourner et, après un ajustement en une position de clapet définie, une liaison fixe du au moins un clapet (2, 2', 2c) de soupape et du au moins un élément (3) de moyeu transmettant un couple étant produite.

2. Agencement (1) de clapet de soupape suivant la revendication 1, **caractérisé en ce que** le au moins un élément (3) de moyeu fixe une position axiale du au moins un clapet (2, 2', 2c) de soupape sur l'arbre (4) ou/et une distance (A) axiale entre deux clapets (2, 2', 2c) de soupape.

3. Agencement (1) de clapet de soupape suivant la revendication 1 ou 2, **caractérisé en ce que** le au moins un élément (3) de moyeu est rendu solidaire en rotation de l'arbre (4) par une liaison (6) arbre-moyeu.

4. Agencement (1) de clapet de soupape suivant la revendication 3, **caractérisé en ce que** le au moins un élément (3) de moyeu est réalisé sous la forme d'un cylindre creux au moins en partie à paroi épaisse, qui a une partie (3b) profilée s'étendant suivant son axe longitudinal.

5. Agencement (1) de clapet de soupape suivant l'une des revendications précédentes, **caractérisé en ce qu'**au moins un élément (9) d'accumulation de force, à propriété élastique comme un ressort, est monté entre le au moins un élément (3) de moyeu et l'arbre (4).

6. Agencement (1) de clapet de soupape suivant l'une des revendications précédentes, **caractérisé en ce que** le au moins un clapet (2, 2', 2c) de soupape est rendu solidaire en rotation du au moins un élément (3) de moyeu par complémentarité de forme ou/et par coopération de matière.

7. Agencement (1) de clapet de soupape suivant la revendication 6, **caractérisé en ce qu'**une solidarisation (5) en rotation par complémentarité de forme du au moins un clapet (2, 2', 2c) de soupape au au moins un élément (3) de moyeu est obtenue par au moins un évidement (8) dans le clapet (2) de soupape dans la direction de l'axe (4a) de l'arbre et par au moins une partie (3c) de liaison, y correspondant et en saillie dans la direction de l'axe (4a) de l'arbre, de l'élément (3) de moyeu.

8. Agencement (1) de clapet de soupape suivant la revendication 7, **caractérisé en ce que** le au moins un évidement (8) est constitué dans une projection sur une surface rectangulairement en ayant des côtés d'évidement parallèles dans la direction de l'axe (4a) de l'arbre et un côté (8a) de poussée perpendiculairement à ceux-ci, la au moins une partie (3c) de liaison en saillie de l'élément (3) de moyeu associé étant constituée de manière à correspondre à l'évidement (8) en projection sur une surface.

9. Agencement (1) de clapet de soupape suivant l'une des revendications 1 à 5, **caractérisé en ce que** le au moins un élément (9) d'accumulation de force, ayant des propriétés d'élasticité de ressort, est monté entre le au moins un élément (3) de moyeu et le au moins un clapet (2, 2', 2c) de soupape.

10. Système de soupape, notamment d'un moteur (10) à combustion interne, comprenant au moins un agencement (1) de clapet de soupape suivant l'une des revendications précédentes, l'arbre (4) étant monté tournant autour de son axe (4a) d'arbre dans une enveloppe du système de soupape et dans lequel le au moins un clapet (2, 2', 2c) de soupape est prévu pour réguler un courant de fluide dans le système de soupape.

11. Système de soupape suivant la revendication 10, **caractérisé en ce qu'**un angle de pivotement de l'arbre (4) autour de son axe (4a) d'arbre ou un trajet de réglage d'un actionneur est limité par un contact du au moins un clapet (2, 2', 2c) de soupape avec une partie associée de l'enveloppe du système de soupape.

12. Système de soupape suivant la revendication 10, **caractérisé en ce qu'**un angle de pivotement de l'arbre (4) autour de son axe (4a) d'arbre ou un trajet de réglage d'un actionneur est limité par au moins une butée extérieure.

13. Système de soupape suivant la revendication 10, **caractérisé en ce qu'**un angle de pivotement de l'arbre (4) autour de son axe (4a) d'arbre ou un trajet de réglage d'un actionneur est limité dans une position d'extrémité par un contact du au moins un clapet (2, 2', 2c) de soupape avec une partie associée de l'enveloppe du système de soupape et l'autre position d'extrémité est limitée par un butée extérieure supplémentaire.

14. Système de soupape suivant l'une des revendications 10 à 13, **caractérisé en ce que** le système de soupape est au moins un système de soupape à deux flux.

15. Système de soupape suivant l'une des revendications 10 à 14, **caractérisé en ce que** le système de soupape est constitué sous la forme d'une soupape (19) d'étranglement de gaz d'échappement, d'une soupape (19) de recyclage de gaz d'échappement et/ou d'une soupape (20) d'étranglement d'air frais d'un moteur (10) à combustion interne.
